(19) **Europäisches Patentamt / European Patent Office / Office européen des brevets**

(11) **EP 3 199 910 B1**

(12) **EUROPEAN PATENT SPECIFICATION**

(45) Date of publication and mention
of the grant of the patent:
**24.06.2020 Bulletin 2020/26**

(21) Application number: **15845253.2**

(22) Date of filing: **16.09.2015**

(51) Int Cl.:
*G01B 11/00* (2006.01)  *B60M 1/28* (2006.01)

(86) International application number:
**PCT/JP2015/076216**

(87) International publication number:
**WO 2016/047510 (31.03.2016 Gazette 2016/13)**

(54) **LINE MEASUREMENT DEVICE AND METHOD**

LINIENMESSVORRICHTUNG UND -VERFAHREN

DISPOSITIF ET PROCÉDÉ DE MESURE DE LIGNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2014 JP 2014196032**

(43) Date of publication of application:
**02.08.2017 Bulletin 2017/31**

(73) Proprietor: **Meidensha Corporation
Tokyo 141-6029 (JP)**

(72) Inventors:
• **KAWABATA, Takuro
Tokyo 141-6029 (JP)**

• **NIWAKAWA, Makoto
Tokyo 141-6029 (JP)**

(74) Representative: **Strehl Schübel-Hopf & Partner
Maximilianstrasse 54
80538 München (DE)**

(56) References cited:
WO-A1-2011/088509 WO-A1-2011/096251
WO-A1-2011/118066 JP-A- 2003 341 389
JP-A- 2003 341 389 JP-A- 2004 132 829
JP-A- 2007 107 962 JP-A- 2011 180 116
JP-A- 2012 008 026 JP-A- 2012 008 026
KR-A- 20130 034 322

**Description**

TECHNICAL FIELD

The present invention relates to a line measurement device and method. Specifically, the present invention relates to a field involving measurement of the deviations and the height positions of overhead lines of railroad tracks and in particular to a field involving measurement of a crossing line that deviates from the center of a vehicle by 900 mm and crosses a main line.

BACKGROUND ART

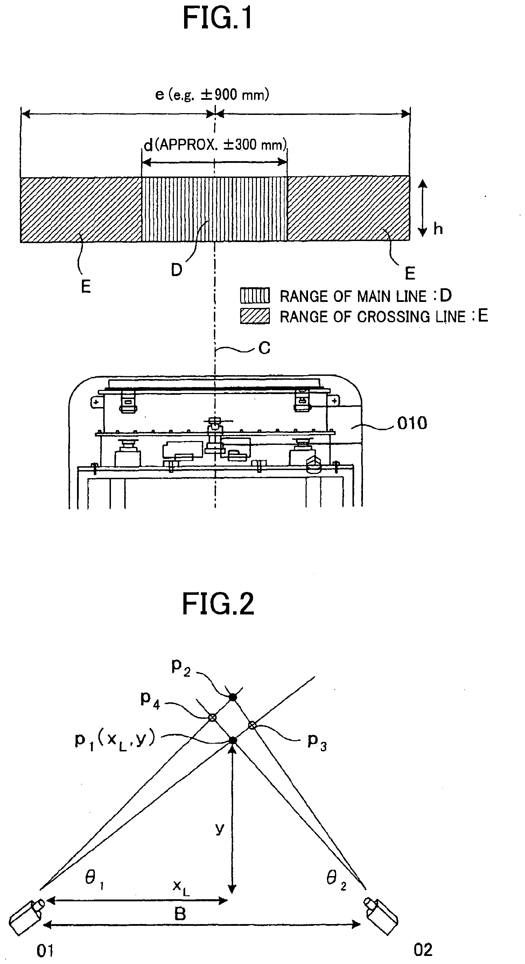

The overhead lines to be measured include a main line and a crossing line. Characteristic features of each overhead line are described below, and the ranges of the main line and the crossing line are illustrated in Fig. 1.

The main line is present within a range of a deviation of approximately ±300 mm from a center line (illustrated with the chain line) C of a train (vehicle) 010, and has a slide surface since a pantograph is always in contact with the main line. As illustrated with the vertical lines in the figure, a range D where the main line is present (the range of the main line) has a certain width d (approximately a deviation of ±300 mm) in the horizontal direction from the center line C of the train 010 and has a certain height h in the vertical direction.

The crossing line is an overhead line crossing the main line and is present within a long range from the center C of the train 010 (e.g. a deviation of approximately ±900 mm) . Also, the crossing line has spots that do not contact the pantograph and therefore has spots without a slide surface. As illustrated with the diagonal lines in the figure, a range E where the crossing line is present (the range of the crossing line) is wider than the range of the main line and has a certain width e (e.g. a deviation of approximately ±900 mm) in the horizontal direction from the center line C of the train 010, and also has the certain height h in the vertical direction.

Moreover, the crossing line is placed at a height within 30 mm from the height of the main line.

Note that each of the main line and the crossing line is a type of trolley wire, and the crossing line is a line that diagonally crosses the main line at points where tracks cross each other.

Patent Document 1 uses stereo measurement as a method of measuring the position of an overhead line. The stereo measurement is a technique that calculates three-dimensional position information based on information on the parallax between a plurality of cameras.

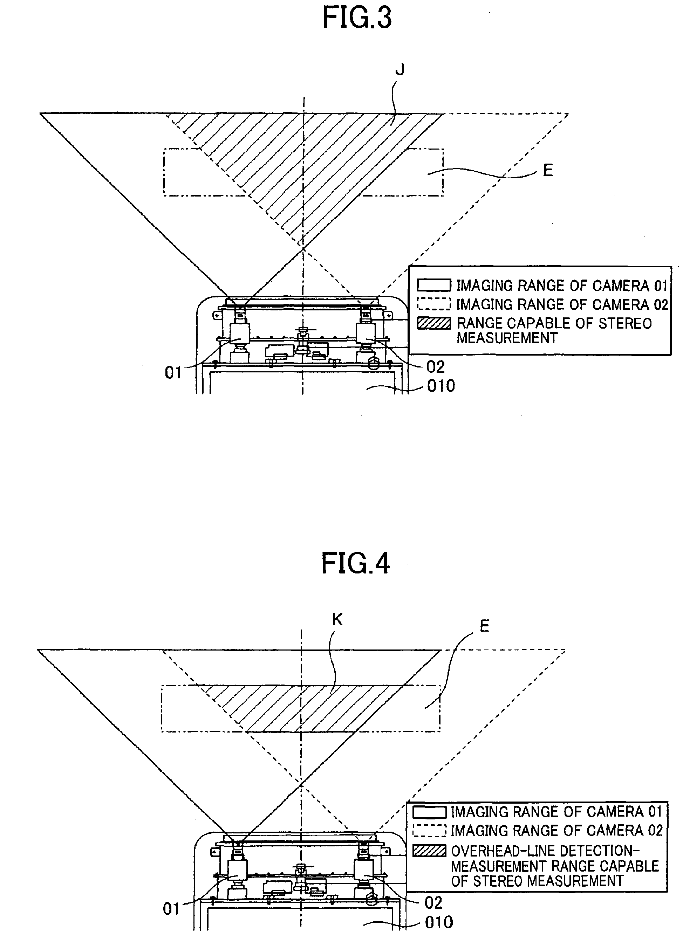

As illustrated in Fig. 3 to Fig. 6, a range at which the imaging range (illustrated with the solid line in the figures) of a line-sensor camera (also abbreviated as camera) 01 and the imaging range (illustrated with the broken line in the figures) of a camera 02 overlap each other is a range J capable of the stereo measurement.

Each imaging range is expressed by the angle of scan along the railroad-tie direction.

Also, the resolutions of deviation and height are expressed by equations (1) and (2) below. The height resolution is dependent on a camera-to-camera distance B such that the greater the camera-to-camera distance B, the higher the height resolution.

Deviation resolution $\Delta x$ (mm/pix):

$$\Delta x = L \times Z / f \qquad \dots (1)$$

Height resolution $\Delta y$ (mm/pix):

$$\Delta y = Z^2 / (A - Z) \qquad \dots (2)$$

$$[A = f \times B / L]$$

Here,

f:    focal length (mm),
L:    length per pixel (mm/pix),
B:    camera-to-camera distance (mm), and
Z:    height to target (mm).

Also, as illustrated in Fig. 2, in a case where two overhead lines are present in images in the overhead-line stereo measurement using the cameras 01 and 02, mismatching occurs in combination of stereo-corresponding points, that is, the camera 01 has two elevation angles $\theta_1$ and the camera 02 has two elevation angles $\theta_2$, and combining them results in detection of not only correct corresponding points p1 and p2 but also wrong corresponding points p3 and p4.

It is hence difficult to detect the real overhead lines only with the stereo-corresponding points in the images. For this reason, Patent Document 1 performs matching of stereo-corresponding points utilizing a laser range meter that measures the distance to each overhead line in the images, as described later.

PRIOR ART DOCUMENT

KR 2013 0034322 A discloses a line measurement device with the features in the preamble of present claim 1. Other conventional devices are described in JP 2003 341389 A and WO 2011/088509 A1.

Patent Document 1: Japanese Patent Application Publication No. 2012-8026

## SUMMARY OF THE INVENTION

### PROBLEMS TO BE SOLVED BY THE INVENTION

Here, the method in Patent Document 1 has the following two problems.

i. As illustrated in Fig. 3, the two cameras 01 and 02 are placed on the roof of the train 010.

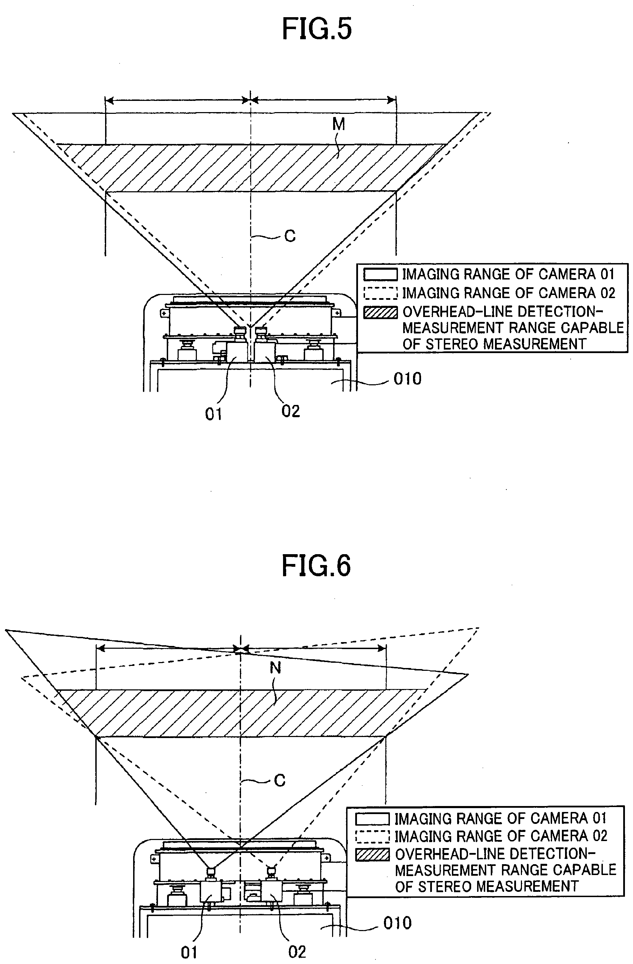

Then, in a pattern 1 which focuses on the imaging resolution by making the camera-to-camera distance long, the range J capable of stereo measurement with the two cameras 01 and 02 (illustrated with the diagonal lines in the figure) cannot cover the range E of the crossing line (illustrated with the two-dot chain line in the figure) . That is, as illustrated in Fig. 4, in the pattern 1, an overhead-line detection-measurement range K capable of stereo measurement (illustrated with the diagonal lines in the figure) is limited to part of the range E of the crossing line, and therefore the imaging range is not satisfactory. As illustrated in Fig. 5, in a pattern 2 which focuses on the imaging range by making the camera-to-camera distance short, an overhead-line detection-measurement range M capable of stereo measurement (illustrated with the diagonal lines in the figure) can cover the range of the crossing line but the camera-to-camera distance is short, and therefore the imaging resolution is not satisfactory.

As illustrated in Fig. 6, in a pattern 3 which focuses on both the resolution and the imaging range by tilting the cameras 01 and 02, the camera-to-camera distance is relatively long, so that an overhead-line detection-measurement range N capable of stereo measurement (illustrated with the diagonal lines in the figure) can cover the range of the crossing line. In this way, the pattern 3 attempts to satisfy both the resolution and the imaging range, but involves a calculation process taking the camera angles into consideration, which complicates the detection-measurement process.

Thus, it is impossible to achieve either a wide imaging range for imaging the crossing line or a fine imaging resolution, and also the detection-measurement process is complicated.

ii. Positional information from a laser range meter is used in the matching of stereo-corresponding points.

The detection rate and accuracy of a laser decrease in proportion to the distance to be measured due to its nature. This makes it difficult to perform stereo measurement of distant overhead lines. Moreover, the cycle of recording of a laser is longer than 0.1 times the cycle of imaging of a line camera and is therefore not suitable for commercial vehicles traveling at high speed.

## MEANS FOR SOLVING THE PROBLEMS

The present invention is defined in the appended claims.

### EFFECT OF THE INVENTION

According to the present invention, the imaging range of the line-sensor camera placed at the center of the vehicle is wider than the imaging ranges of the line-sensor cameras placed at the opposite ends of the vehicle. Hence, it is possible to achieve both a wide imaging range and a fine imaging resolution when the image processing device performs imaging processing utilizing stereo measurement on images of overhead lines captured by the three line-sensor cameras placed at the opposite ends and the center of the vehicle.

### BRIEF DESCRIPTION OF THE DRAWINGS

[Fig. 1] Fig. 1 is an explanatory diagram illustrating the ranges of overhead lines.
[Fig. 2] Fig. 2 is an explanatory diagram illustrating an example of correct corresponding points and wrong corresponding points in overhead-line stereo measurement with line-sensor cameras.
[Fig. 3] Fig. 3 is an explanatory diagram illustrating an example of a range capable of stereo measurement.
[Fig. 4] Fig. 4 is an explanatory diagram illustrating stereo measurement with two cameras (pattern 1: focusing on the imaging resolution).
[Fig. 5] Fig. 5 is an explanatory diagram illustrating stereo measurement with two cameras (pattern 2: focusing on the imaging range).
[Fig. 6] Fig. 6 is an explanatory diagram illustrating stereo measurement with two cameras (pattern 3: focusing on both the resolution and the imaging range).
[Fig. 7] Fig. 7 is an explanatory diagram illustrating an arrangement on the roof of a train.
[Fig. 8] Fig. 8 is an explanatory diagram illustrating the imaging ranges of cameras.
[Fig. 9] Fig. 9 is a diagram of requirements for the arrangement of the cameras.
[Fig. 10] Fig. 10 is a diagram of a region capable of stereo imaging using the left-end and center cameras.
[Fig. 11] Fig. 11 is a diagram of a region capable of stereo imaging using the right-end and center cameras.
[Fig. 12] Fig. 12 is an explanatory diagram illustrating overlapping portions the imaging ranges of the left-end camera and the right-end camera.
[Fig. 13] Part (a) of Fig. 13 is a schematic diagram of a pantograph-height measurement device, and part (b) of Fig. 13 is an enlarged perspective view of a region H circled by the broken line in part (a) of Fig. 13.

[Fig. 14] Fig. 14 is a block diagram of a line measurement device according to a first embodiment of the present invention (crossing-line detection based on pantograph height information).

[Fig. 15] Fig. 15 is a flowchart of the crossing-line detection (the crossing-line detection based on the pantograph height information).

[Fig. 16] Fig. 16 is a block diagram of a line measurement device according to a second embodiment of the present invention (crossing-line detection based on main-line stereo measurement information).

[Fig. 17] Fig. 17 is a flowchart of the crossing-line detection (the crossing-line detection based on the main-line stereo measurement information).

[Fig. 18] Fig. 18 is a front view illustrating the relation between a crossing line and other overhead lines among overhead-line candidates.

MODES FOR CARRYING OUT THE INVENTION

The present invention will be specifically described below with reference to embodiments illustrated in the drawings.

EMBODIMENT 1

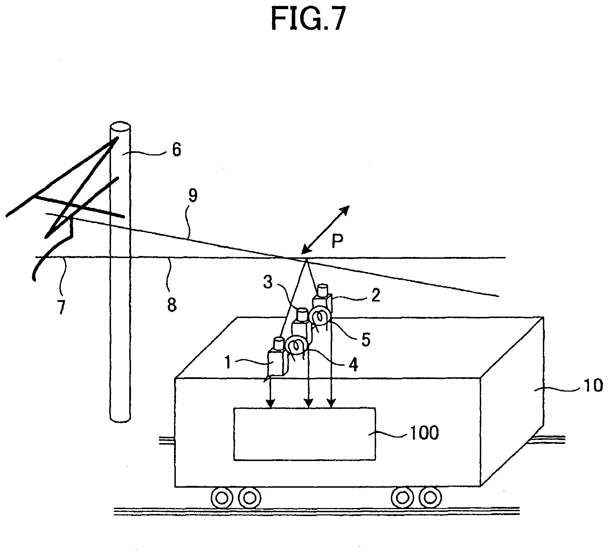

A line measurement device and method according to a first embodiment of the present invention are illustrated in Fig. 7 to Fig. 15. This embodiment involves detecting a crossing line with pantograph height information. Specifically, this embodiment is characterized in that it can achieve a wide imaging range for the crossing line (e.g. a deviation of ± 900 mm) and also a fine imaging resolution with three cameras placed at opposite ends and center of the top of a vehicle.

Specifically, as illustrated in Fig. 7, a trolley wire (main line) 8 and a trolley wire (crossing line) 9 are hung on poles 6 standing on the sides of a train 10 via pull-off arms 7. The trolley wire (crossing line) 9 diagonally crosses the trolley wire (main line) 8.

At the opposite ends and center of the roof of the vehicle (train) 10, three line-sensor cameras (also abbreviated simply as cameras) 1, 2, and 3 are placed facing upward so as to be capable of imaging the trolley wires 8 and 9, which are overhead lines. Lighting devices 4 and 5 are disposed between the cameras 1, 2, and 3.

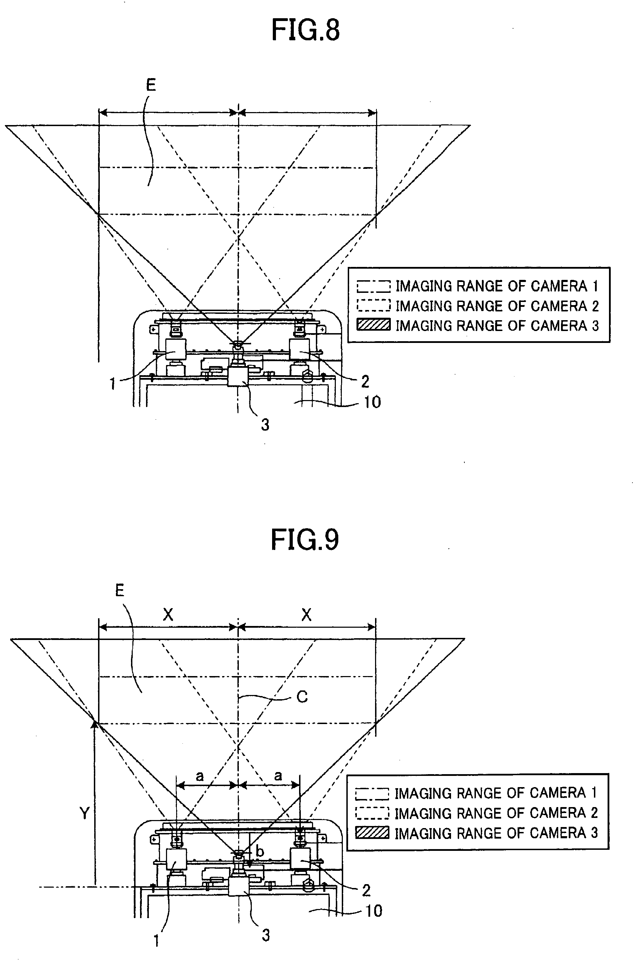

Each of the cameras 1, 2, and 3 performs scanning in a railroad-tie direction P illustrated in the figure by arrows to image a predetermined imaging range. Here, the camera 3 placed at the center has a wider imaging range than the imaging ranges of the cameras 1 and 2 placed at the opposite ends. Specifically, as illustrated in Fig. 8, the imaging range of the camera 3 placed at the center of the train 10 (illustrated with the solid line in the figure) is wider than the imaging range of the camera 1 placed at the left end of the train 10 (illustrated with the chain line in the figure) and the imaging range of the camera 2 placed at the right end of the train 10 (illustrated with the broken line in the figure). Requirements for the camera arrangement will be described later.

An image processor 100 is disposed in the train 10, and images of overhead lines captured by the cameras 1, 2, and 3 are sent to the image processor 100 as line-sensor signals.

While serving as an image recorder that records the sent line-sensor signals as images, the image processor 100 also measures the heights and deviations of the overhead lines by performing image processing utilizing stereo measurement on the sent line-sensor signals, or the images of the overhead lines.

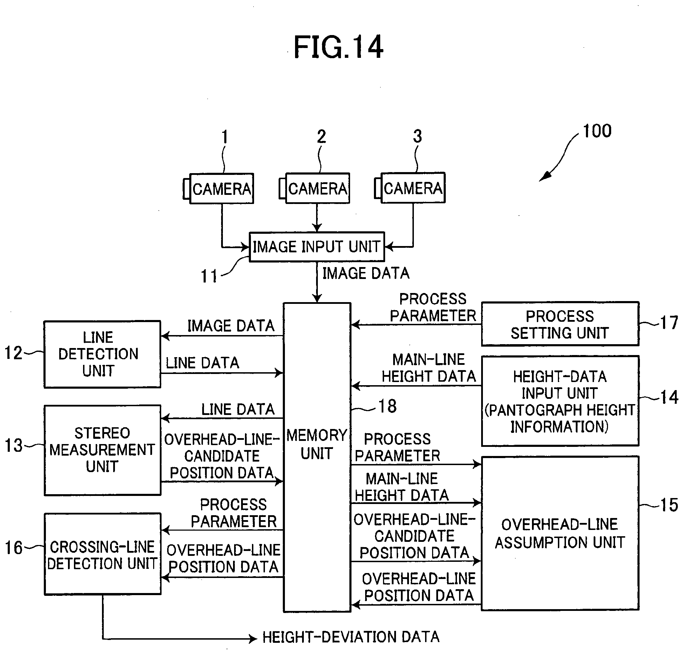

Specifically, as illustrated in Fig. 14, the image processor 100 includes an image input unit 11, a line detection unit 12, a stereo measurement unit 13, a height-data input unit 14, an overhead-line assumption unit 15, a crossing-line detection unit 16, a process setting unit 17, and a memory unit 18.

The image input unit 11 inputs line-sensor signals from the cameras 1, 2, and 3 into the memory unit 18 as image data.

The line detection unit 12 detects line data from the image data stored in the memory unit 18. The line data refers to information on the position of the overhead line (s) in the image from each camera. The line-data detection is performed for each of the cameras 1, 2, and 3.

The stereo measurement unit 13 creates overhead-line-candidate position data via stereo measurement based on the line data on each camera detected by the line detection unit 12. The stereo measurement is performed using a range at which the imaging ranges of the cameras overlap each other.

The height-data input unit 14 acquires main-line height data based on pantograph height information. Here, the height of the pantograph is defined as the height of the main line.

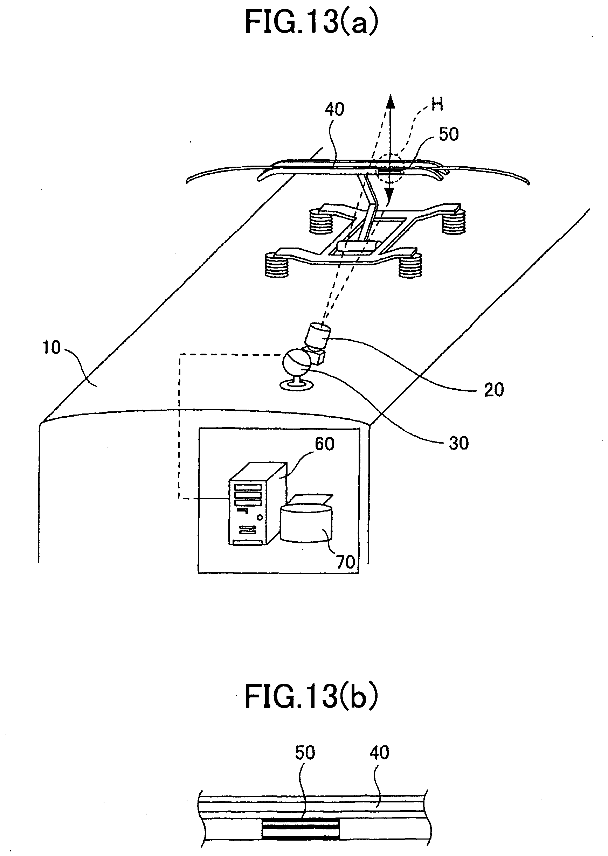

For the pantograph height information, for example, a pantograph-height measurement device may be used which, as illustrated in parts (a) and (b) of Fig. 13, measures the height of a pantograph 40 by imaging a marker 50 on the pantograph 40 with a line-sensor camera 20. Details will be described later.

From the overhead-line-candidate position data, created by the stereo measurement unit 13, the overhead-line assumption unit 15 assumes which one is the crossing line, based on a height condition that the crossing line, which is an overhead line, is at a certain height relative to the main line, which is an overhead line, in particular, a condition that "the crossing line is within 30 mm from the height of the main line". That is, the overhead-line-candidate position data that meets the above height condition is assumed as the crossing line. The above height condition is a characteristic overhead-line feature. The main-line height information is inputted from the height-data input unit 14.

The crossing-line detection unit 16 detects the overhead-line-candidate position data that meets the height condition of the overhead-line assumption unit 15 as the crossing line, and sends the height and deviation of the detected crossing line to a display device (not illustrated) and a record device (not illustrated). Any overhead-line-candidate position data that does not meet the above height condition is processed as noise.

The process setting unit 17 sets various process parameters.

The memory unit 18 stores various pieces of data.

Now, requirements for the arrangement of the cameras 1, 2, and 3 will be described with reference to Fig. 9.

A distance a of deviation of each of the cameras 1 and 2, placed at the opposite ends of the train 10, is adjusted such that its imaging range covers a deviation of X on one side of imaging at a minimum imaging height Y. The minimum imaging height Y refers to the distance from the roof of the train 10 to the lowermost end of a range E of the crossing line.

Specifically, the imaging range of the camera 1 placed at the left end of the train 10 (illustrated by the chain line in the figure) covers the entire left half of the range E of the crossing line halved at a center line C of the train 10 (the left half in the figure), and the imaging range of the camera 2 placed at the right end of the train 10 (illustrated by the broken line in the figure) covers the entire right half of the range E of the crossing line halved at the center line C of the train 10 (the right half in the figure).

The width of the range E of the crossing line in the horizontal direction is a deviation of 2X, i.e. a deviation of X toward the right and left from the center line C of the train 10.

The camera 3 is placed at the center of the train 10. That is, the distance of deviation of the camera 3 is 0.

A height distance b of the camera 3, placed at the center, is adjusted such that its imaging range covers a deviation of 2X across the opposite sides of the imaging at the minimum imaging height Y.

That is, the imaging range of the camera 3 (illustrated with the solid line in the figure) covers the entire range E of the crossing line. The height distance b of the camera 3 is measured downward from the height of the cameras 1 and 2, and the cameras 1 and 2 are placed at a certain height from the roof of the train 10.

Note that, while the camera 3 is disposed at the center of the train 10 and the cameras 1 and 2 are disposed at the opposite ends of the train 10, the "center" and "opposite ends" mentioned here do not refer to exact positions. This applies to the center line C of the train 10. The positions are to be flexibly interpreted such that both a wide imaging range and a fine imaging resolution can be achieved, which is the core of the technical idea of the present invention.

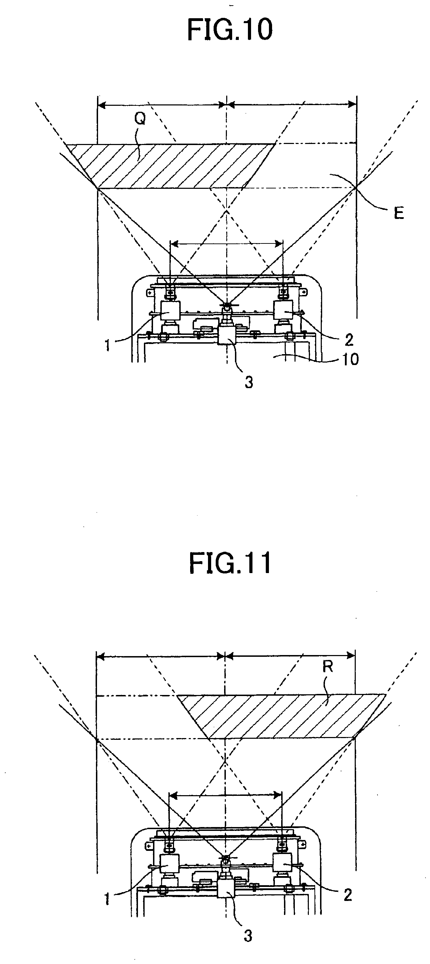

Fig. 10 and Fig. 11 illustrate overhead-line detection-measurement ranges capable of stereo measurement with the cameras 1, 2, and 3.

Fig. 10 is a diagram in which the left-end camera 1 and the center camera 3 cover the left half range (e.g. 900 mm) of the range E of the crossing line halved at the center line C of the train 10.

That is, an overhead-line detection-measurement range Q capable of stereo measurement with the left-end camera 1 and the center camera 3 cover the entire left half range (e.g. 900 mm) of the range E of the crossing line halved at the center line C of the train 10.

Fig. 11 is a diagram in which the right-end camera 2 and the center camera 3 cover the right half range (e.g. 900 mm) of the range E of the crossing line halved at the center line C of the train 10.

That is, an overhead-line detection-measurement range R capable of stereo measurement with the right-end camera 2 and the center camera 3 cover the entire right half range (e.g. 900 mm) of the range E of the crossing line halved at the center line C of the train 10.

Thus, with the combination of the cameras 1 and 2 which have a high resolution but a narrow imaging range and the camera 3 which has a wide imaging range but a low resolution, it is possible to perform stereo measurement at a high resolution with an imaging range covering the crossing line.

Note that Patent Document 1 states in paragraph [0016] that "in the overhead-line position measurement device according to this embodiment, two line-sensor cameras are placed, but stereo measurement may be performed with three or more line-sensor cameras placed to search for a stereo-corresponding point". However, the statement neither is specific nor describes any camera arrangement or requirement that brings about a special advantageous effect.

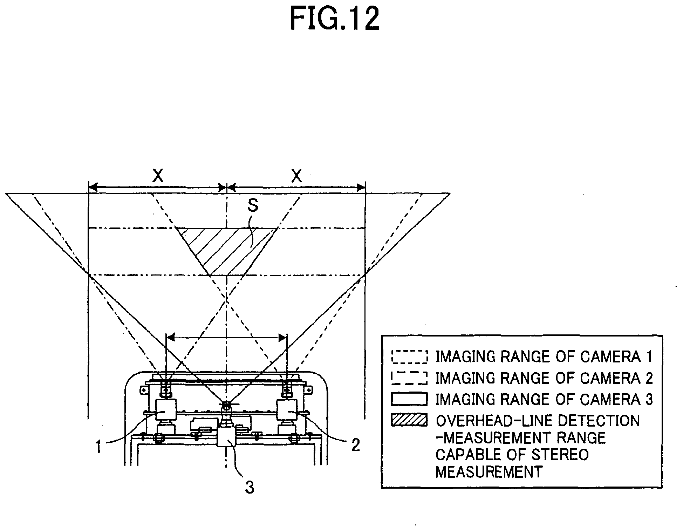

Also, for a region S at which the imaging ranges of the cameras 1 and 2 overlap each other (an overhead-line detection-measurement range capable of stereo measurement) as illustrated in Fig. 12, it is possible to use the average of the overhead-line position information of the camera 1 and the camera 3 and the overhead-line position information of the camera 1 and the camera 3.

This increases positional information per overhead line and thus makes it possible to acquire more accurate positional information.

This embodiment is characterized in that, as correspondence information for detecting the real overhead line out of wrong stereo-corresponding points, a characteristic overhead-line feature "the crossing line is within 30 mm from the height of the main line" (height condition) is used, instead of the laser range meter in the conventional technique, to limit the overhead-line candidates in terms of height and thereby enable line measurement of the crossing line.

Specifically, candidates assumed as lines via stereo measurement from images captured by the cameras 1, 2, and 3 include the crossing line as well as other overhead lines and virtual overhead lines resulting from wrong correspondence.

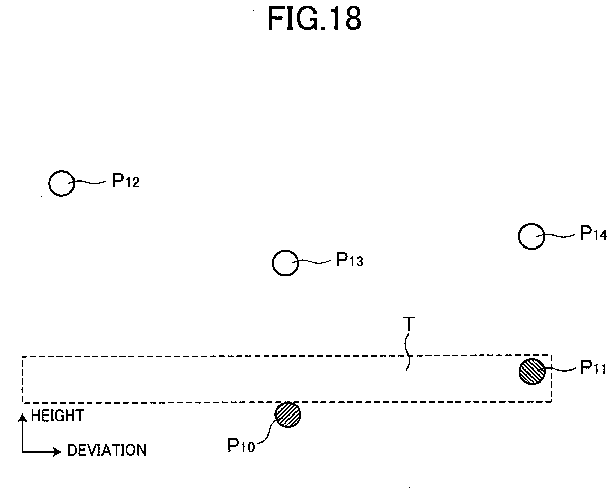

For example, as illustrated in Fig. 18, there are a main line $P_{10}$ as well as a crossing line $P_{11}$ and other overhead lines $P_{12}$, $P_{13}$, and $P_{14}$.

This is limited to "within 30 mm from the main line" from the height information on the main line $P_{10}$. Specifically, as illustrated in Fig. 18, an overhead line present in a height range T where the crossing line is present defined by limiting the height from the height data on the main line $P_{10}$ is detected as the crossing line $P_{11}$.

In this embodiment, the main-line height information for limiting the height of the crossing line is acquired using the pantograph-height measurement device illustrated in Fig. 13, for example.

In this way, the height of the crossing line is limited, thereby making it possible to narrow down the corresponding points in the stereo measurement and accordingly perform proper line measurement of the crossing line. Moreover, since cameras are used instead of a laser, this embodiment is applicable to commercial vehicles traveling at high speed.

Here, specifically, the pantograph-height measurement device may be one as illustrated in part (a) of Fig. 13 that includes a line-sensor camera 20 and a lighting device 30 placed on the roof of the train 10 and acquires a video of a marker 50 attached to the head of the pantograph 40 with the line-sensor camera 20 while illuminating the marker 50 with the lighting device 30 (Japanese Patent Application Publication No. 2013-181755).

Here, the line-sensor camera 20 is placed with the imaging plane of its line sensor extending across the pantograph 40 and the marker 50 vertically in the up-down direction (illustrated by the arrows in the figure). In this way, the marker 50 can always be imaged regardless of where the pantograph 40 is displaced in the height direction.

As illustrated in an enlarged view in part (b) of Fig. 13, the marker 50 is a striped pattern obtained by laying a second region with a color and material that easily reflect light (white maker) over a first region as a base with a color and material that do not easily reflect light (black marker).

Further, an image processor 60 performs image processing on an image captured by the line-sensor camera 20. As the result of the image processing, the height of the pantograph 40 thus measured is recorded in a record device 70.

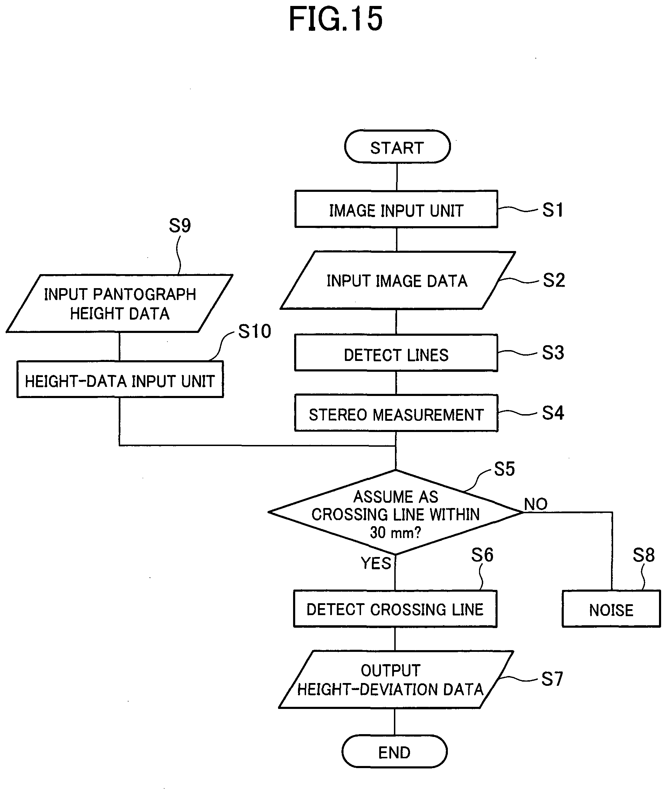

The procedure of operation in this embodiment will be described with reference to a flowchart illustrated in Fig. 15.

First, images of overhead lines captured by the cameras 1, 2, and 3 are sent as line-sensor signals to the image input unit 11 of the image processor 100 (step S1) and inputted as image data into the memory unit 18 (step S2).

Then, based on the image data inputted into the memory unit 18, the line detection unit 12 detects line data which is positional information on the overhead line (s) in the image from each camera (step S3). Based on the line data on each camera detected by the line detection unit 12, the stereo measurement unit 13 creates overhead-line-candidate position data via stereo measurement (step S4). The overhead-line-candidate position data also includes non-target overhead lines and virtual overhead lines resulting from mismatching of corresponding lines as illustrated in Fig. 18. It is impossible to properly identify the crossing line with only the overhead-line-candidate position data.

For this reason, pantograph height information measured with a pantograph-height measurement device as illustrated in Fig. 13 is inputted (step S9), and the height-data input unit 14 defines the height of the pantograph as the height of the main line (step S10).

Thereafter, based on main-line height information inputted from the height-data input unit 14 and the overhead-line-candidate position data created by the stereo measurement unit 13, the overhead-line assumption unit 5 identifies the crossing line by using the height condition that "the crossing line is placed within 30 mm from the height of the main line". Specifically, as illustrated in Fig. 18, the overhead line present in the height range T where the crossing line is present defined by limiting the height from the height data on the main line $P_{10}$ is detected as the crossing line $P_{11}$.

Then, the overhead-line candidate which meets the above height condition is detected as the crossing line by the crossing-line detection unit 16 (step S6) and the height and deviation of the detected crossing line are outputted as data (step S7). On the other hand, the overhead-line candidates which do not meet the above height condition are processed as noise (step S8).

As described above, this embodiment brings about the following advantageous effects.

1) The placement of the cameras is limited to the roof of the vehicle. With the only two-camera configuration in Patent Document 1, it is impossible to achieve either a wide imaging range for imaging the crossing line or a fine imaging resolution.
This embodiment, however, employs the configuration where three cameras are placed at the opposite ends and center of the top of the vehicle. This embodiment is superior since, with the combination of the cameras 1 and 2 which have a high resolution but a narrow imaging range and the camera 3 which has a wide imaging range but a low resolution, it is possible to perform stereo measurement at a high resolution with a wide imaging range covering the range of the crossing line (e.g. a deviation of ±900 mm).

2) Patent Document 1 uses positional information from a laser range meter in the matching of stereo-corresponding points. The detection rate and accuracy of a laser decrease in proportion to the distance to be measured due to its nature. This makes it difficult to perform stereo measurement of distant overhead lines.

However, this embodiment is superior since it uses the characteristic overhead-line feature "the crossing line is within 30 mm from the height of the main line", instead of a laser range meter, to limit the overhead-line candidates in terms of height and thereby enable line measurement of the crossing line.

Moreover, for the main-line height information, this embodiment uses pantograph height measurement (Fig. 13) in which a camera is used instead of a laser range meter. Then, considering the cycle of imaging, this embodiment is also applicable to commercial vehicles traveling at high speed.

EMBODIMENT 2

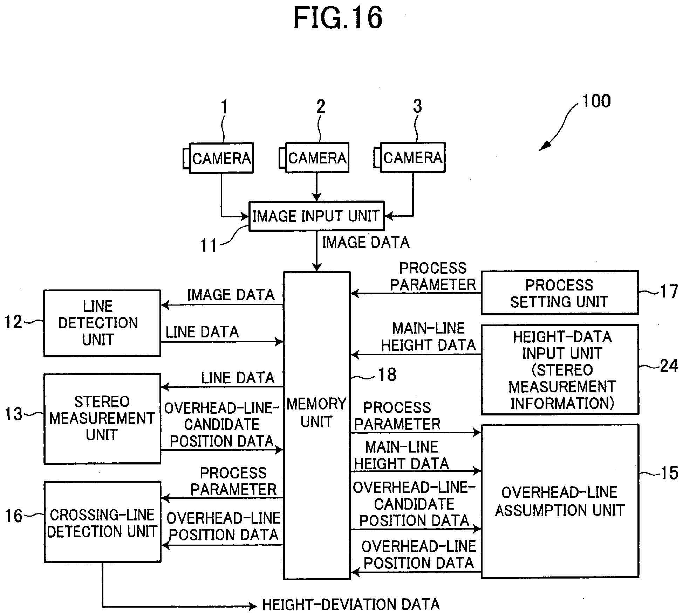

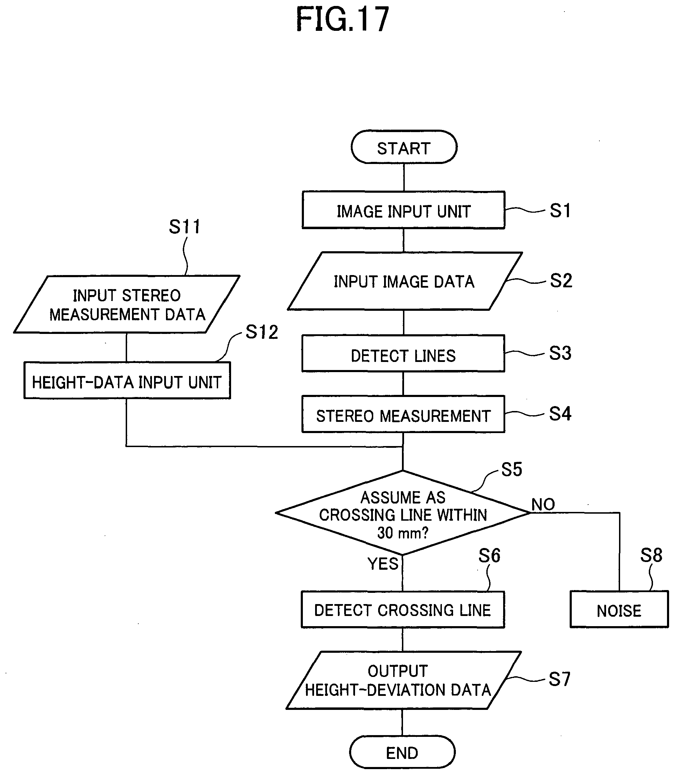

A line measurement device and method according to a second embodiment of the present invention are illustrated in Fig. 16 and Fig. 17. This embodiment involves detecting a crossing line with information on stereo measurement of a main line.

Specifically, this embodiment differs from embodiment 1 in that information on the height of the main line is acquired via stereo measurement of the main line instead of the pantograph height measurement (Fig. 13).

Thus, in a block diagram of the line measurement device in this embodiment illustrated in Fig. 16, a height-information-data input unit (stereo measurement information) 24 is used instead of the height-data input unit (pantograph height information) 14 in Fig. 14. Moreover, in a flowchart illustrated in Fig. 17 illustrating the procedure of operation in this embodiment, input of stereo measurement data in step S11 is used instead of the input of the pantograph height data in step S9. Besides these differences, this embodiment has a similar configuration and advantageous effects to embodiment 1, illustrated in Fig. 7 to Fig. 15.

The height-information-data input unit (stereo measurement information) 24, illustrated in Fig. 16, inputs data on the height of the main line based on stereo measurement. For example, the line detection unit 12 detects line data which is information on the position of the main line from at least two of images captured by the three cameras 1, 2, and 3, and the stereo measurement unit 13 detects the height of the main line from the detected line data via stereo measurement.

Moreover, in the flowchart illustrated in Fig. 17, the height of the main line measured via the stereo measurement by the stereo measurement unit 13 is inputted (step S11), and the height-data input unit 24 inputs the measured height of the main line as the height of the main line (step S12).

Thus, this embodiment differs from embodiment 1 in that the height-information-data input unit (stereo measurement information) 24 uses the main-line height data calculated via stereo measurement of the main line instead of the pantograph height information.

As described above, according to this embodiment, the main-line height information is acquired via stereo measurement. Thus, in addition to the advantageous effects 1) and 2) of embodiment 1, this embodiment has the advantage that a pantograph-height measurement device as exemplarily illustrated in Fig. 13 is not needed.

INDUSTRIAL APPLICABILITY

The present invention is widely industrially applicable as a line measurement device and method.

EXPLANATION OF THE REFERENCE NUMERALS

    1, 2, 3 line-sensor camera (camera)
    4, 5 lighting device
    6 pole
    7 pull-off arm
    8 trolley wire (main line)
    9 trolley wire (crossing line)
    10 train (vehicle)
    11 image input unit
    12 line detection unit
    13 stereo measurement unit
    14 height-data input unit (pantograph height information)
    15 overhead-line assumption unit
    16 crossing-line detection unit
    17 process setting unit
    18 memory unit
    20 line-sensor camera
    24 data input unit (stereo measurement information)
    30 lighting device
    40 pantograph
    50 marker
    60 image processor
    70 record device
    100 image processor
    C center line of train
    D range of main line
    E range of crossing line
    J range capable of stereo measurement
    K, M, N, Q, R, S overhead-line detection-measurement range capable of stereo measurement
    T height range where crossing line is present

**Claims**

1. A line measurement device including
   a vehicle (10) having a pantograph (40),
   three line-sensor cameras (1-3) that are placed at opposite left and right lateral ends and at a center (C) of the vehicle (10) between the lateral ends, and that are adapted to image overhead lines (8, 9) including a main line (8) and a crossing line (9), and an image processing device (100) that is adapted to measure heights and deviations of the overhead lines (8, 9) by performing image processing utilizing stereo measurement on images of the overhead lines (8, 9) captured by the three line-sensor cameras (1-3),

**characterized in that**

the line-sensor camera (3) placed at the center (C) of the vehicle (10) has a low resolution and a wider imaging range than imaging ranges of the line-sensor cameras (1, 2) having a high resolution placed at the opposite left and right ends of the vehicle (10), the imaging range of the line-sensor camera (3) placed at the center (C) of the vehicle (10) is an entire range (E) where the crossing line (9) is present, and the imaging range of each of the line-sensor cameras (1, 2) placed at the opposite ends of the vehicle (10) is one of halves of the range (E) of the crossing line (9) halved at the center (C) of the vehicle (10) so that an overhead-line detection-measurement range (Q) capable of stereo measurement with the left-end camera (1) and the center camera (3) covering the entire left half range of the range (E) of the crossing line (9) and an overhead-line detection-measurement range (R) capable of stereo measurement with the right-end camera (2) and the center camera (3) covering the entire right half range of the range (E) of the crossing line (9) is provided.

2. The line measurement device according to claim 1, **characterized in that,** when the three line-sensor cameras (1-3) image the crossing line (9), the image processing device (100) is adapted to measure the height and the deviation of the crossing line (9) while assuming, as the crossing line (9), only an overhead line meeting a height condition that the crossing line (9) is at a certain height relative to the main line (8).

3. The line measurement device according to claim 2, **characterized in that**
the line measurement device further comprises a pantograph-height measurement device (20) that is adapted to measure a height of the pantograph (40) contacting the main line (8), and
the image processing device (100) is adapted to set the height condition by using the height of the pantograph (40) measured by the pantograph-height measurement device (20) as a height of the main line (8).

4. The line measurement device according to claim 2, **characterized in that**
the line measurement device further comprises a stereo measurement device (13) that is adapted to detect a height of the main line (8) by utilizing stereo measurement, and

the image processing device (100) is adapted to set the height condition by using the height of the main line (8) detected by the stereo measurement device (13).

5. The line measurement device according to any preceding claim, wherein the main line (8) is to be always in contact with the pantograph (40) and the crossing line (9) diagonally crosses the main line (8).

6. A line measurement method including:

placing three line-sensor cameras (1-3) that image overhead lines (8, 9) at opposite left and right lateral ends and a center (C) of a vehicle (10) between the lateral ends, the overhead lines (8, 9) including a main line (8) and a crossing line (9), and
measuring heights and deviations of the overhead lines (8, 9) by performing image processing utilizing stereo measurement on images of the overhead lines (8, 9) captured by the three line-sensor cameras (1-3),

**characterized in that**

the line-sensor camera (3) placed at the center (C) of the vehicle (10) has a low resolution and a wider imaging range than imaging ranges of the line-sensor cameras (1, 2) having a high resolution placed at the opposite left and right ends of the vehicle (10),
the imaging range of the line-sensor camera (3) placed at the center (C) of the vehicle (10) is an entire range (E) of the crossing line (9), and
the imaging range of each of the line-sensor cameras (1, 2) placed at the opposite ends of the vehicle (10) is one of halves of the range (E) of the crossing line (9) halved at the center (C) of the vehicle (10) so that an overhead-line detection-measurement range (Q) capable of stereo measurement with the left-end camera (1) and the center camera (3) covering the entire left half range of the range (E) of the crossing line (9) and an overhead-line detection-measurement range (R) capable of stereo measurement with the right-end camera (2) and the center camera (3) covering the entire right half range of the range (E) of the crossing line (9) is provided.

7. The line measurement method according to claim 6, **characterized in that,** when the three line-sensor cameras (1-3) image the crossing line (9), an image processing device (100) measures the height and the deviation of the crossing line (9) while assuming, as the crossing line (9), only an overhead line meeting a height condition that the crossing line (9) is at a certain height relative to the main line (8).

8. The line measurement method according to claim 7, **characterized in that** the line measurement method further comprises:

    measuring a height of the pantograph (40) contacting the main line (8); and
    setting the height condition by using the measured height of the pantograph (40) as a height of the main line (8).

9. The line measurement method according to claim 7, **characterized in that** the line measurement method further comprises:

    detecting a height of the main line (8) by utilizing stereo measurement; and
    setting the height condition by using the detected height of the main line (8).

10. The line measurement method according to any of claims 6 to 9, wherein the main line (8) is to be always in contact with the pantograph (40) and the crossing line (9) diagonally crosses the main line (8).

**Patentansprüche**

1. Leitungsmessvorrichtung mit
einem Fahrzeug (10), das einen Pantographen (40) aufweist,
drei Liniensensorkameras (1-3), die an entgegengesetzten linken und rechten Seitenenden und einer Mitte (C) des Fahrzeugs (10) zwischen den Seitenenden angeordnet und dazu ausgelegt sind, Oberleitungen (8, 9) einschließlich einer Hauptleitung (8) und einer kreuzenden Leitung (9) abzubilden, und
einer Bildverarbeitungsvorrichtung (100), die dazu ausgelegt ist, Höhen und Abweichungen der Oberleitungen (8, 9) zu messen, indem eine Bildverarbeitung durchgeführt wird, die eine Stereomessung an Bildern der Oberleitungen (8, 9) durchführt, die durch die drei Liniensensorkameras (1-3) aufgenommen wurden,
**dadurch gekennzeichnet, dass**
die an der Mitte (C) des Fahrzeugs (10) angeordnete Liniensensorkamera (3) eine niedrige Auflösung und einen weiteren Abbildungsbereich aufweist als Abbildungsbereiche der Liniensensorkameras (1, 2) mit einer hohen Auflösung, die an den entgegengesetzten linken und rechten Enden des Fahrzeugs (10) angeordnet sind,
der Abbildungsbereich der an der Mitte (C) des Fahrzeugs (10) angeordneten Liniensensorkamera (3) ein Gesamtbereich (E) ist, an dem die kreuzende Leitung (9) vorhanden ist, und
der Abbildungsbereich von jeder der an den entgegengesetzten Enden des Fahrzeugs (10) angeordneten Liniensensorkameras (1, 2) eine der Hälften des Bereichs (E) der kreuzenden Leitung (9) halbiert an der Mitte (C) des Fahrzeugs (10) ist, so dass ein Oberleitungserfassungs-Messbereich (Q), der dazu ausgelegt ist, eine Stereomessung mit der linksseitigen Kamera (1) und der Mittelkamera (3), die die gesamte linke Hälfte des Bereichs (E) der kreuzenden Leitung (9) abdecken, und einen Oberleitungserfassungs-Messbereich (R), der dazu ausgelegt ist, eine Stereomessung mit der rechtsseitigen Kamera (2) und der Mittelkamera (3) auszuführen, die die gesamte rechte Hälfte des Bereichs (E) der kreuzenden Leitung (9) abdecken, bereitgestellt ist.

2. Leitungsmessvorrichtung nach Anspruch 1, **dadurch gekennzeichnet, dass**, wenn die drei Liniensensorkameras (1-3) die kreuzende Leitung (9) abbilden, die Bildverarbeitungsvorrichtung (100) dazu ausgelegt ist, die Höhe und die Abweichung der kreuzenden Leitung (9) unter der Annahme zu messen, dass die kreuzende Leitung (9) nur eine Oberleitung ist, die eine Höhenbedingung erfüllt, dass die kreuzende Leitung (9) an einer bestimmten Höhe relativ zu der Hauptleitung (8) ist.

3. Leitungsmessvorrichtung nach Anspruch 2, **dadurch gekennzeichnet, dass**
die Leitungsmessvorrichtung ferner eine Pantographenhöhen-Messvorrichtung (20) aufweist, die dazu ausgelegt ist, eine Höhe des Pantographen (40) zu messen, der die Hauptleitung (8) kontaktiert, und
die Bildverarbeitungsvorrichtung (100) dazu ausgelegt ist, die Höhenbedingung einzustellen, indem die durch die Pantographenhöhen-Messvorrichtung (20) gemessene Höhe des Pantographen (40) als eine Höhe der Hauptleitung (8) verwendet wird.

4. Leitungsmessvorrichtung nach Anspruch 2, **dadurch gekennzeichnet, dass**
die Leitungsmessvorrichtung ferner eine Stereomessvorrichtung (13) aufweist, die dazu ausgelegt ist, eine Höhe der Hauptleitung (8) zu erfassen, indem eine Stereomessung verwendet wird, und
die Bildverarbeitungsvörrichtung (100) dazu ausgelegt ist, die Höhenbedingung einzustellen, indem die durch die Stereomessvorrichtung (13) erfasste Höhe der Hauptteilung (8) verwendet wird.

5. Leitungsmessvorrichtung nach einem der vorstehenden Ansprüche, wobei die Hauptleitung (8) immer in Kontakt mit dem Pantographen (40) ist und die kreuzende Leitung (9) die Hauptleitung (8) diagonal kreuzt.

6. Leitungsmessverfahren, in dem
drei Liniensensorkameras (1-3), die Oberleitungen (8, 9) abbilden, an entgegengesetzten linken und rechten Seitenenden und einer Mitte (C) eines Fahrzeugs (10) zwischen den Seitenenden angeordnet sind, wobei die Oberleitungen (8, 9) eine Hauptleitung (8) und eine kreuzende Leitung (9) umfassen, und

Höhen und Abweichungen der Oberleitungen (8, 9) gemessen werden, indem eine Bildverarbeitung durchgeführt wird, die eine Stereomessungen an Bildern der Oberleitungen (8, 9) durchführt, die durch die drei Liniensensorkameras (1-3) aufgenommen wurden,

**dadurch gekennzeichnet, dass**

die an der Mitte (C) des Fahrzeugs (10) angeordnete Liniensensorkamera (3) eine niedrige Auflösung und einen weiteren Abbildungsbereich aufweist als Abbildungsbereiche der Liniensensorkameras (1, 2) mit einer hohen Auflösung, die an den entgegengesetzten linken und rechten Enden des Fahrzeugs (10) angeordnet sind,

der Abbildungsbereich der an der Mitte (C) des Fahrzeugs (10) angeordneten Liniensensorkamera (3) ein Gesamtbereich (E) der kreuzenden Leitung (9) ist, und

der Abbildungsbereich von jeder der an den entgegengesetzten Enden des Fahrzeugs (10) angeordneten Liniensensorkameras (1, 2) eine der Hälften des Bereichs (E) der kreuzenden Leitung (9) halbiert an der Mitte (C) des Fahrzeugs (10) ist, so dass ein Oberleitungserfassungs-Messbereich (Q), der dazu ausgelegt ist, eine Stereomessung mit der linksseitigen Kamera (1) und der Mittelkamera (3), die die gesamte linke Hälfte des Bereichs (E) der kreuzenden Leitung (9) abdecken, und einen Oberleitungserfassungs-Messbereich (R), der dazu ausgelegt ist, eine Stereomessung mit der rechtsseitigen Kamera (2) und der Mittelkamera (3) auszuführen, die die gesamte rechte Hälfte des Bereichs (E) der kreuzenden Leitung (9) abdecken, bereitgestellt ist.

7. Leitungsmessverfahren nach Anspruch 6, **dadurch gekennzeichnet, dass**, wenn die drei Liniensensorkameras (1-3) die kreuzende Leitung (9) abbilden, eine Bildverarbeitungsvorrichtung (100) die Höhe und die Abweichung der kreuzenden Leitung (9) unter der Annahme misst, dass die kreuzende Leitung (9) nur eine Oberleitung ist, die eine Höhenbedingung erfüllt, dass die kreuzende Leitung (9) an einer bestimmten Höhe relativ zu der Hauptleitung (8) ist.

8. Leitungsmessverfahren nach Anspruch 7, **dadurch gekennzeichnet, dass** in dem Leitungsmessverfahren ferner

eine Höhe des Pantographen (40) gemessen wird, der die Hauptleitung (8) kontaktiert, und

die Höhenbedingung eingestellt wird, indem die gemessene Höhe des Pantographen (40) als eine Höhe der Hauptleitung (8) verwendet wird.

9. Leitungsmessverfahren nach Anspruch 7, **dadurch gekennzeichnet, dass**

eine Höhe der Hauptleitung (8) erfasst wird, indem eine Stereomessung verwendet wird, und

die Höhenbedingung eingestellt wird, indem die erfasste Höhe der Hauptleitung (8) verwendet wird.

10. Leitungsmessverfahren nach einem der Ansprüche 6 bis 9, wobei die Hauptleitung (8) immer in Kontakt mit dem Pantographen (40) ist und die kreuzende Leitung (9) die Hauptleitung (8) diagonal kreuzt.

**Revendications**

1. Dispositif de mesure de lignes incluant

un véhicule (10) ayant un pantographe (40),

trois caméras de détection de lignes (1-3) qui sont placées au niveau d'extrémités latérales gauche et droite opposées et en un centre (C) du véhicule (10) entre les extrémités latérales, et qui sont adaptées à imager des lignes aériennes de contact (8, 9) incluant une ligne principale (8) et une ligne de croisement (9), et

un dispositif de traitement d'images (100) qui est adapté à mesurer des hauteurs et des écarts des lignes aériennes de contact (8, 9) en exécutant un traitement d'images utilisant une mesure stéréo sur des images des lignes aériennes de contact (8, 9) capturées par les trois caméras de détection de lignes (1-3),

**caractérisé en ce que**

la caméra de détection de lignes (3) placée au centre (C) du véhicule (10) a une basse résolution et une plage d'imagerie plus large que des plages d'imagerie des caméras de détection de lignes (1, 2) ayant une haute résolution placées aux extrémités gauche et droite opposées du véhicule (10),

la plage d'imagerie de la caméra de détection de lignes (3) placée au centre (C) du véhicule (10) est une plage totale (E) où la ligne de croisement (9) est présente, et

la plage d'imagerie de chacune des caméras de détection de lignes (1, 2) placées aux extrémités opposées du véhicule (10) est une de moitiés de la plage (E) de la ligne de croisement (9) partagée en deux au centre (C) du véhicule (10) de telle manière qu'une plage de mesure de détection de lignes aériennes de contact (Q) apte à une mesure stéréo avec la caméra de côté gauche (1) et la caméra centrale (3) couvrant la plage totale de moitié gauche de la plage (E) de la ligne de croisement (9) et une plage de mesure de détection de lignes aériennes de contact (R) apte à une mesure stéréo avec la caméra de côté droit (2) et la caméra centrale (3) couvrant la plage totale de moitié droite de la plage (E) de la ligne de croisement (9) sont fournies.

2. Dispositif de mesure de lignes selon la revendication 1, **caractérisé en ce que,** lorsque les trois caméras de détection de lignes (1-3) imagent la ligne de croisement (9), le dispositif de traitement d'images (100) est adapté à mesurer la hauteur et l'écart de la ligne de croisement (9) tout en supposant, comme la ligne de croisement (9), uniquement une ligne aérienne de contact satisfaisant à une condition de hauteur telle que la ligne de croisement (9) est à une certaine hauteur par rapport à la ligne principale (8).

3. Dispositif de mesure de lignes selon la revendication 2, **caractérisé en ce que** le dispositif de mesure de lignes comprend en outre un dispositif de mesure de hauteur de pantographe (20) qui est adapté à mesurer une hauteur du pantographe (40) en contact avec la ligne principale (8), et

le dispositif de traitement d'images (100) est adapté à définir la condition de hauteur en utilisant la hauteur du pantographe (40) mesurée par le dispositif de mesure de hauteur de pantographe (20) comme une hauteur de la ligne principale (8).

4. Dispositif de mesure de lignes selon la revendication 2, **caractérisé en ce que** le dispositif de mesure de lignes comprend en outre un dispositif de mesure stéréo (13) qui est adapté à détecter une hauteur de la ligne principale (8) en utilisant une mesure stéréo, et

le dispositif de traitement d'images (100) est adapté à définir la condition de hauteur en utilisant la hauteur de la ligne principale (8) détectée par le dispositif de mesure stéréo (13).

5. Dispositif de mesure de lignes selon une quelconque revendication précédente, dans lequel la ligne principale (8) doit être toujours en contact avec le pantographe (40) et la ligne de croisement (9) croise diagonalement la ligne principale (8).

6. Procédé de mesure de lignes incluant :

la mise en place de trois caméras de détection de lignes (1-3) qui imagent des lignes aériennes de contact (8, 9) au niveau d'extrémités latérales gauche et droite opposées et en un centre (C) d'un véhicule (10) entre les extrémités latérales, les lignes aériennes de contact (8, 9) incluant une ligne principale (8) et une ligne de croisement (9), et

la mesure de hauteurs et d'écarts des lignes aériennes de contact (8, 9) en exécutant un traitement d'images utilisant une mesure stéréo sur des images des lignes aériennes de contact (8, 9) capturées par les trois caméras de détection de lignes (1-3),

**caractérisé en ce que**

la caméra de détection de lignes (3) placée au centre (C) du véhicule (10) a une basse résolution et une plage d'imagerie plus large que des plages d'imagerie des caméras de détection de lignes (1, 2) ayant une haute résolution placées aux extrémités gauche et droite opposées du véhicule (10),

la plage d'imagerie de la caméra de détection de lignes (3) placée au centre (C) du véhicule (10) est une plage totale (E) de la ligne de croisement (9), et

la plage d'imagerie de chacune des caméras de détection de lignes (1, 2) placées aux extrémités opposées du véhicule (10) est une de moitiés de la plage (E) de la ligne de croisement (9) partagée en deux au centre (C) du véhicule (10) de telle manière qu'une plage de mesure de détection de lignes aériennes de contact (Q) apte à une mesure stéréo avec la caméra de côté gauche (1) et la caméra centrale (3) couvrant la plage totale de moitié gauche de la plage (E) de la ligne de croisement (9) et une plage de mesure de détection de lignes aériennes de contact (R) apte à une mesure stéréo avec la caméra de côté droit (2) et la caméra centrale (3) couvrant la plage totale de moitié droite de la plage (E) de la ligne de croisement (9) sont fournies.

7. Procédé de mesure de lignes selon la revendication 6, **caractérisé en ce que,** lorsque les trois caméras de détection de lignes (1-3) imagent la ligne de croisement (9), un dispositif de traitement d'images (100) mesure la hauteur et l'écart de la ligne de croisement (9) tout en supposant, comme la ligne de croisement (9), uniquement une ligne aérienne de contact satisfaisant à une condition de hauteur telle que la ligne de croisement (9) est à une certaine hauteur par rapport à la ligne principale (8).

8. Procédé de mesure de lignes selon la revendication 7, **caractérisé en ce que** le procédé de mesure de lignes comprend en outre :

la mesure d'une hauteur du pantographe (40) en contact avec la ligne principale (8) ; et la définition de la condition de hauteur en utilisant la hauteur mesurée du pantographe (40) comme une hauteur de la ligne principale (8).

9. Procédé de mesure de lignes selon la revendication 7, **caractérisé en ce que** le procédé de mesure de lignes comprend en outre :

la détection d'une hauteur de la ligne principale (8) en utilisant une mesure stéréo ; et la définition de la condition de hauteur en utilisant la hauteur détectée de la ligne principale (8).

10. Procédé de mesure de lignes selon l'une quelconque des revendications 6 à 9, dans lequel la ligne principale (8) doit être toujours en contact avec le pantographe (40) et la ligne de croisement (9) croise diagonalement la ligne principale (8).

# FIG.1

e (e.g. ±900 mm)

d (APPROX. ±300 mm)

h

E                    D                    E

E

[[[[[]]]] RANGE OF MAIN LINE : D
[////] RANGE OF CROSSING LINE : E

C

010

# FIG.2

$p_2$

$p_4$

$p_1(x_L, y)$          $p_3$

$y$

$\theta_1$          $x_L$          $\theta_2$

B

01                                    02

# FIG.3

| | IMAGING RANGE OF CAMERA 01 |
| | IMAGING RANGE OF CAMERA 02 |
| | RANGE CAPABLE OF STEREO MEASUREMENT |

# FIG.4

| | IMAGING RANGE OF CAMERA 01 |
| | IMAGING RANGE OF CAMERA 02 |
| | OVERHEAD-LINE DETECTION-MEASUREMENT RANGE CAPABLE OF STEREO MEASUREMENT |

# FIG.5

M

C

| | IMAGING RANGE OF CAMERA 01 |
| | IMAGING RANGE OF CAMERA 02 |
| | OVERHEAD-LINE DETECTION-MEASUREMENT RANGE CAPABLE OF STEREO MEASUREMENT |

010

01    02

# FIG.6

N

C

| | IMAGING RANGE OF CAMERA 01 |
| | IMAGING RANGE OF CAMERA 02 |
| | OVERHEAD-LINE DETECTION-MEASUREMENT RANGE CAPABLE OF STEREO MEASUREMENT |

010

01    02

# FIG.7

# FIG.8

| | |
|---|---|
| ⊡ | IMAGING RANGE OF CAMERA 1 |
| ⊡ | IMAGING RANGE OF CAMERA 2 |
| ▨ | IMAGING RANGE OF CAMERA 3 |

# FIG.9

| | |
|---|---|
| ⊡ | IMAGING RANGE OF CAMERA 1 |
| ⊡ | IMAGING RANGE OF CAMERA 2 |
| ▨ | IMAGING RANGE OF CAMERA 3 |

# FIG.10

# FIG.11

# FIG.12

X | X

S

| | |
|---|---|
| ⌐ ⌐ ⌐ | IMAGING RANGE OF CAMERA 1 |
| ⌐ ⌐ ⌐ | IMAGING RANGE OF CAMERA 2 |
| ▭ | IMAGING RANGE OF CAMERA 3 |
| ▨ | OVERHEAD-LINE DETECTION -MEASUREMENT RANGE CAPABLE OF STEREO MEASUREMENT |

1

2

3

# FIG.13(a)

# FIG.13(b)

# FIG.14

# FIG.15

START

IMAGE INPUT UNIT — S1

INPUT IMAGE DATA — S2

DETECT LINES — S3

STEREO MEASUREMENT — S4

S5 ASSUME AS CROSSING LINE WITHIN 30 mm?

NO

YES

S9 INPUT PANTOGRAPH HEIGHT DATA

S10 HEIGHT-DATA INPUT UNIT

S6 DETECT CROSSING LINE

S8 NOISE

OUTPUT HEIGHT-DEVIATION DATA — S7

END

# FIG.16

# FIG.17

START

IMAGE INPUT UNIT ── S1

S11

INPUT STEREO
MEASUREMENT DATA

INPUT IMAGE DATA ── S2

S12

HEIGHT-DATA INPUT UNIT

DETECT LINES ── S3

STEREO MEASUREMENT ── S4

S5

ASSUME AS
CROSSING LINE WITHIN
30 mm?

NO

YES

DETECT CROSSING LINE ── S6

S8

NOISE

OUTPUT
HEIGHT-DEVIATION DATA ── S7

END

24

# FIG.18

P12

P13

P14

T

P11

HEIGHT

DEVIATION

P10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20130034322 A
- JP 2003341389 A
- WO 2011088509 A1
- JP 2012008026 A
- JP 2013181755 A